# EUROPEAN PATENT APPLICATION

(11) **EP 1 647 421 A1**
(43) Date of publication of application: **19.04.2006**
(21) Application number: 05109442.3
(22) Date of filing: 11.10.2005
(51) Int. Cl.: B60C 13/00

(54) **Decorative metal foils for tires**

(30) Priority: 18.10.2004 US 967876
(71) Applicant: THE GOODYEAR TIRE & RUBBER COMPANY, Akron, Ohio 44316-0001 (US)
(72) Inventor: Benzing II, James Alfred, 44720, North Canton (US)
(74) Representative: Kutsch, Bernd

(57) **Abstract**

A method for adhering an element to rubber such as applying a metal foil to tires includes applying a metallic foil (30) to one of the sidewalls (14) before the tire (10) is completely cured. The metallic foil (30) may be applied directly to the sidewall (14) of a green tire (34), and then cured simultaneously with the tire. The metallic foil may further have a carrier (32). The carrier (32) may be removed after a curing cycle, or it may become part of the tire (10). The metallic foil (30) may also be attached to a precured piece of rubber before being attached to the green tire (34).

## Description

### Background of the Invention

This invention pertains to a tire and a method for adhering an element to rubber such as metal foils for tires, and more specifically to a method for adhering metal foils to an uncured or green piece of rubber.

It is known in the art of tires to have decals applied to the sidewalls for decorative purposes but also to improve sightability of the tires at night for instance. In the past, latex lettering was positioned on a carrier, such as mylar. As many as three arcuate pieces of mylar and lettering would be needed to position letters around the entire sidewall circumference. Also, the positioning of lettering would occur after the tire was completely cured. Heat would need to be applied again to the lettering in the sidewall region. Then, the mylar would be removed and the lettering would remain.

Although suited for its intended purpose, there are many drawbacks for using this method. First, a tremendous amount of labor and material is needed to position and heat three pieces of mylar about every race tire. Second, the latex lettering has a tendency to become damaged as the tire is used. If damage occurs, the process must be repeated to attach a new letter or letters.

The present invention provides methods for adhering metallic foils to tires and solves the aforementioned difficulties by positioning the metallic foils on a tire sidewall before the tire is completed cured.

### Summary of the Invention

According to one aspect of the present invention, a tire according to claim 1 is disclosed.

Another object of the present invention is to provide a tire wherein the metallic foil may be operatively connected to a carrier.

Another object of the present invention is to provide a tire, wherein the metallic foil may be adapted to increase sightability of an associated vehicle as light reflects off the metallic foil on the tire.

It is yet another object of the present invention to provide a method for adhering an element to rubber, according to claim 3.

It is yet another object of the present invention to provide a method for adhering an element to rubber, wherein the element may be a metallic foil.

Further, another object of the present invention is to provide a method for adhering an element to rubber, wherein the uncured piece of rubber may be a green tire.

Yet, another object of the present invention is to provide a method for adhering an element to rubber, which may further comprise the steps of precuring the uncured piece of rubber; attaching the metallic foil to its surface; heating the precured piece of rubber with the metallic foil; detaching a portion of the precured piece of rubber having the metallic foil; and attaching the precured rubber having the metallic foil to a green tire; wherein the step of curing the rubber further comprises the step of simultaneously curing the precured piece of rubber and the green tire.

Another object of the present invention is to provide a method for adhering an element to rubber, wherein the metallic foil may be operatively connected to a carrier, such that the method may further comprise the step of removing the carrier from the metallic foil after curing.

Further yet, another object of the present invention is to provide a method for adhering an element to rubber, wherein the carrier may become a part of the cured rubber.

It is yet another object of the present invention to provide a method for adhering an element to rubber, which may further comprise the steps of spraying the metallic foil with a protective coating before curing the element into the rubber during a curing process and protecting the metallic foil from degrading in the mold during the curing process.

Still further, another object of the present invention is to provide a method for adhering an element to rubber, which may further comprise the steps of forming a decorative design with the metallic foil on the surface of the cured rubber.

Another object of the present invention is to provide a method wherein the tire may be a passenger tire, race tire, off the road tires, emergency vehicle tires or a hose.

Another object of the present invention is to provide a method for adhering an element to rubber, wherein the steps may comprise providing a tire press having a mold; providing a green tire having a surface; operatively connecting the metallic foil to the surface of the green tire; curing the tire; and removing the cured tire from the mold.

Another object of the present invention is to provide a method for forming a metallic foil into a tire, wherein the step of operatively connecting the metallic foil to the surface of the green tire may further comprise the steps of providing a green piece of rubber; precuring the green piece of rubber; attaching the metallic foil to the precured rubber; heating the piece of precured rubber; detaching a portion of the precured piece of rubber with the metallic foil; and attaching the precured rubber with the metallic foil to the green tire, wherein the step of curing the tire, further comprises the step of simultaneously curing the tire and the precured rubber.

Another object of the present invention is to provide a method for forming a metallic foil into a tire, wherein after curing the tire, the metallic foil may be disposed on a tire sidewall.

It is yet another object of the present invention wherein the color of the carrier may be about the same color as the metallic foil.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a cross section view of a tire.
FIGURE 2 is a top perspective view of a cured tire having metallic foils cured into a tire.
FIGURE 3a is a perspective fragmentary view of the metallic foil material prior to being disposed on a tire.
FIGURE 3b is a perspective fragmentary view of another embodiment of the metallic foil material prior to being disposed on a tire.
FIGURE 4 is a flow chart showing one embodiment of the present invention.
FIGURE 4A is a partial perspective view of an uncured piece of rubber.
FIGURE 5 is another flow chart showing another embodiment of the present invention.
FIGURE 5A is a partial perspective view of an uncured piece of rubber.

### Description of the Preferred Embodiment

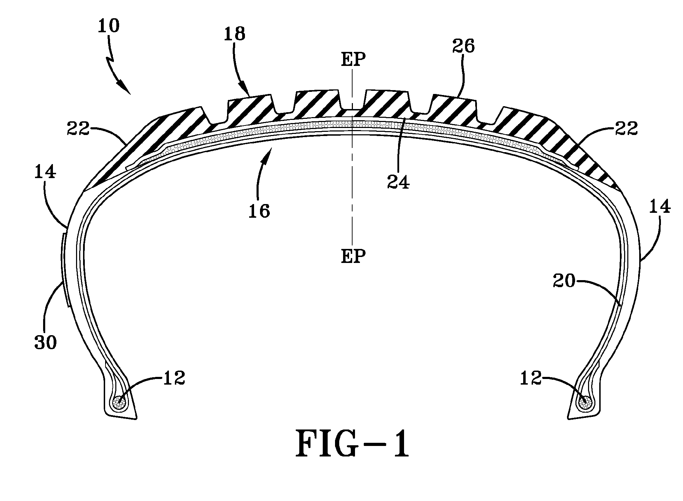

Referring now to the drawings wherein the showings are for purposes of illustrating a preferred embodiment of the invention, FIGURE 1-5A show the present invention.

With reference to FIGURE 1, a tire 10 is shown. By way of example, the following description provides details of general tire components. There is shown a tire 10, which is a toroidal-shaped composite structure which is provided with a pair of circular substantially inextensible beads 12 for mounting of the tire 10 on a rim. The tire 10 has an equatorial plane EP, which is the plane perpendicular to the tire's axis of rotation and passing through the center of its tread 18. A pair of sidewalls 14 extends from the beads 12 respectively to a crown portion 16, which extends circumferentially about the tire 10. Tread 18 for engaging the ground is provided on the outer periphery of the crown portion 16. A carcass of two or more plies 20 of elastomer-impregnated fabric extends between the beads 12 to provide reinforcement in the sidewalls 14 and crown portion 16 of the tire. These plies 20 may be comprised of a plurality of generally parallel reinforcing cords (not shown) which extend at a cord angle not greater than 75 degrees. The cords of one ply extending at the same angle but in an opposed direction to the cords of the other ply such that the cords of one ply cross the cords of the other ply in a manner commonly known to those of ordinary skill in the art. Cord angle means that angle at which cords of a ply or belt extend relative to and at the mid-circumferential plane of a tire. The tread 18 further comprises tread edges 22, which are the outermost points of a tire 10. The tire may also comprise a belt 24 and bead elements 26. The tread edges 22 touch the ground as the tire travels through its footprint while mounted on a vehicle under rated load and pressure. The carcass cords (not shown) may be made of any suitable material such as, by way of example only, nylon, rayon, polyester, fiberglass, aramid, or wire.

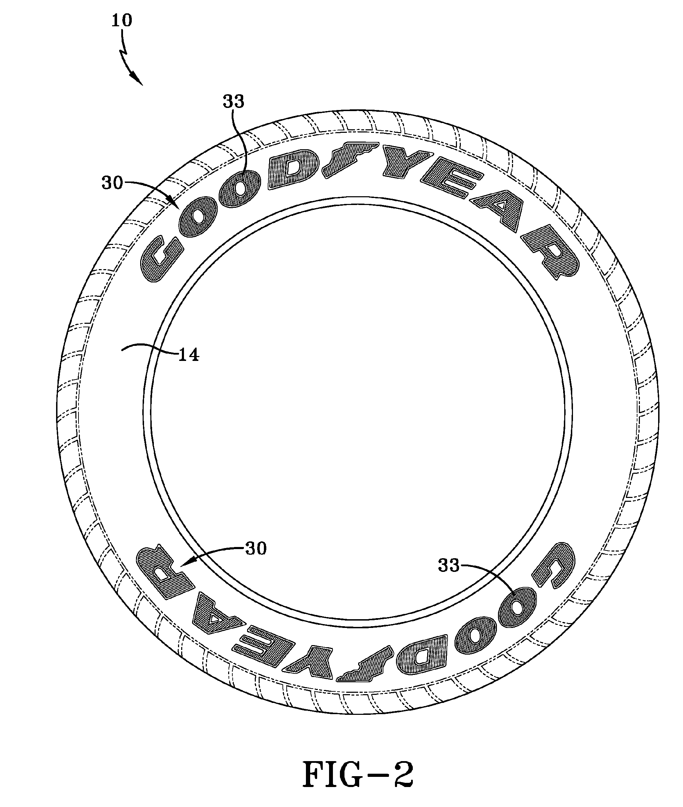

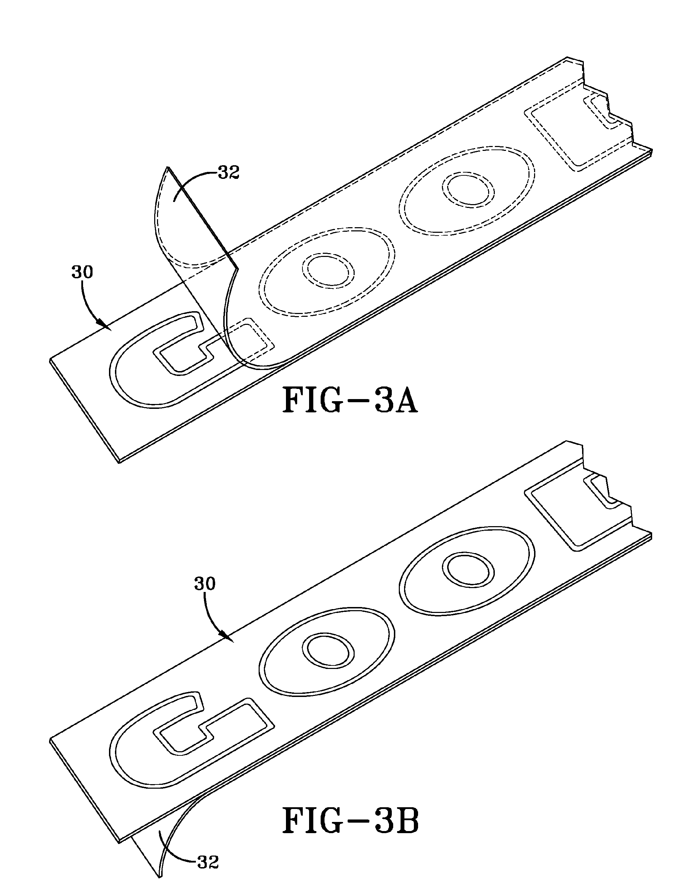

With reference to FIGURES 2 and 3, a metallic foil 30 is adapted to be disposed on one of the sidewalls 14 before the tire 10 is completely cured. After the curing cycle is completed, the metallic foil 30 forms a decorative part of the cured tire 10. The metallic foil 30 is adapted to increase sightability of an associated vehicle as light reflects off the metallic foil 30 on the tire 10. Any metallic material may be chosen in accordance with sound engineering judgment, including without limitation, aluminum. The color of the metallic foil 30 may be any color chosen with sound engineering judgment, such as but not limited to silver or gold. Further, the metallic foil 30 should be no thicker than 0.000005 micrometers in order to maintain its flexibility thin enough to maintain its flexibility, which results in better adherence and durability to the tire sidewall 14. The metallic foils 30 may be positioned on the sidewall 14 manually or through other mechanical, or electro-mechanical means, such as by a robotic arm.

With reference to FIGURE 3a, the metallic foil 30 may be operatively connected to a carrier 32. Further, the carrier 32, may be of a nylon material, or mylar, or any other material chosen with sound engineering judgment. In one embodiment of the invention, the thickness of the rubber carrier 32 may range from 0.0005" to 0.006" thick should be less than 0.0001 micrometers. As will be described below, the carrier 32 may be positioned over the metallic foil 30 to protect it during a curing cycle. The carrier 32 may then be removed after the curing cycle to expose the metallic foil 30.

In another embodiment of the invention, best seen in FIGURE 3b, the carrier 32 may be positioned under the metallic foil 30 so that it becomes part of the tire 10 during the curing cycle. In this embodiment, the carrier 32 may be about the same color as the metallic foil 30. If the metallic foil 30 would rub off or become damaged, the color of the carrier 32 would show through and the metallic foil 30 would not need to be immediately replaced to maintain the appearance of the tire sidewall 14.

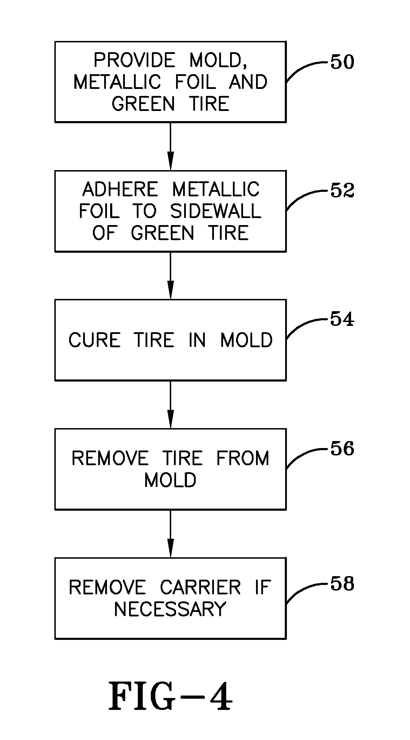

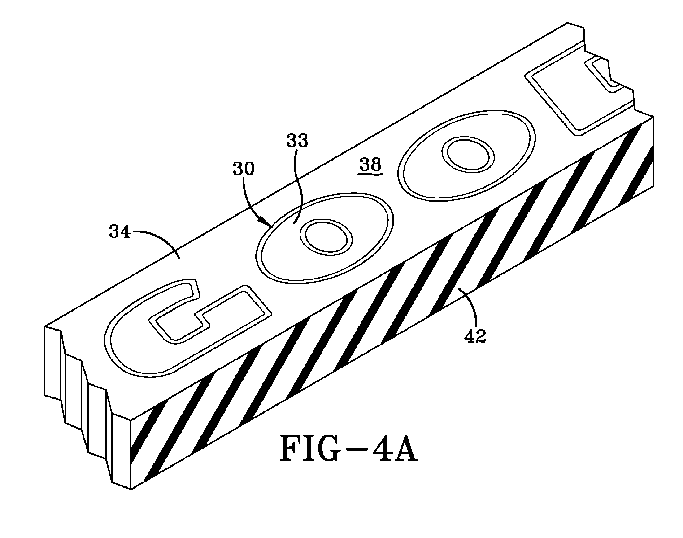

In order to improve efficiency and reduce cost to applying lettering and decals to tires, it is has been discovered that incorporating the application of letters to an uncured tire is beneficial. With reference to FIGURES 4 and 4A, the following method may be utilized in order to apply metallic foil 30 to the sidewall 14 of a passenger tire 10. Generally, a mold, elements 33, such as letters, numbers, two-dimensional, or three-dimensional graphics, an uncured piece of rubber 34 and a tire mold are provided 50. The elements 33 are attached to the tire sidewall 14, 52. The element 33, which may take the form of the metallic foil 30 as previously described, is positioned directly on the uncured piece of rubber 34, wherein the uncured piece of rubber 34 has a surface 38. In one embodiment of the present invention, the uncured piece of rubber 34 may be a green tire 42. Due to the characteristics of the green tire, the element 33 sticks to the surface 38. The piece of rubber 34 is then cured in the mold 54. The cured tire is then removed from the mold 56.

With continuing reference to FIGURE 4, in another step of the inventive method, the carrier 32 may be removed from the metallic foil 30 after curing 58. In another embodiment of the invention, the carrier 32 may become part of the cured rubber 34. The metallic foil 30 may be applied to the uncured piece of rubber 34 without the carrier 32, and in order to protect the metallic foil 30 from degrading in the mold 36, a clear, protective spray or coating is applied over the metallic foil 30 before the curing cycle. The protective spray prevents sticking between the tire mold and the metallic foil 30, so that if small movement occurs in the mold during the curing cycle, the metallic foil 30 is not damaged.

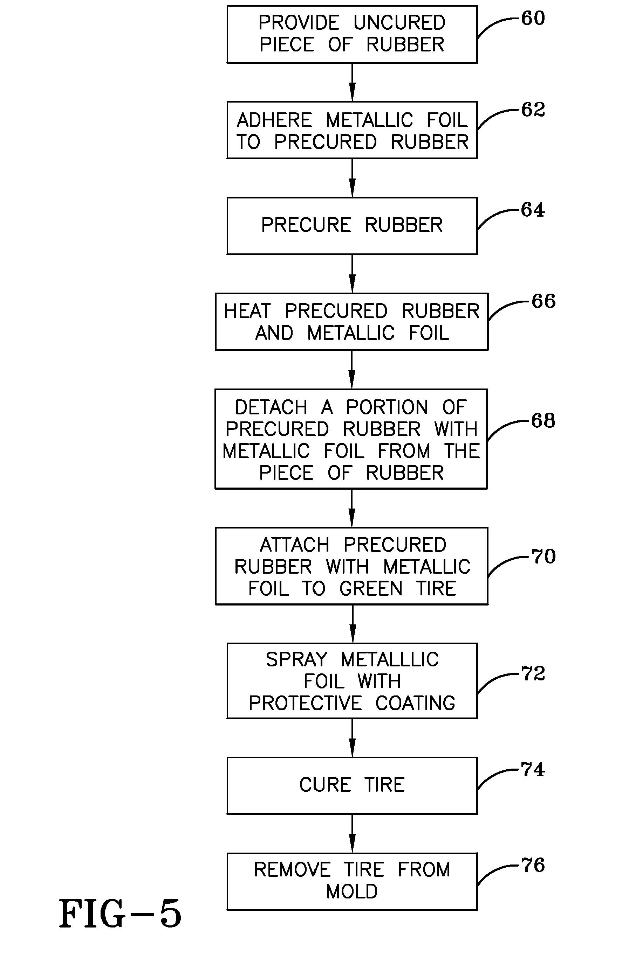

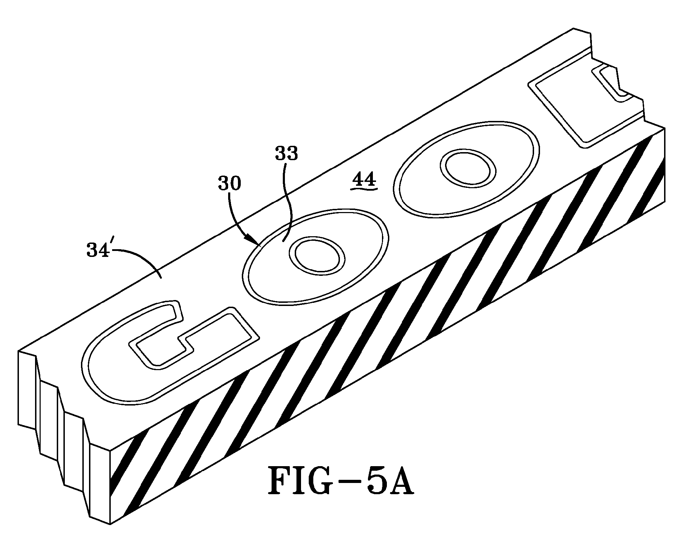

With reference to FIGURES 5 and 5A, the following method may be used in order to adhere metallic foil 30 to the sidewall 14 of a race tire. The mold is provided as well as the elements 33, and the uncured piece of rubber 34'. The uncured piece of rubber 34' has a surface 44. Before attaching tThe elements 33 are attached to the surface 44 of the uncured piece of rubber 34', 62. Next the uncured piece of rubber 34' with the elements 33 may pass through the rollers of , the uncured piece of rubber 34' is precured 62 through any means chosen with sound engineering judgment such as through calandering means (not shown), or other mechanism chosen with sound engineering judgment. Next the piece of rubber 34' is precured, and the elements 33, which may be the metallic foil 30, may be precured 64. The precured piece of rubber 34' having the metallic foil 30 may be heated 66 additionally by means chosen with sound engineering judgment, so that the metallic foil 30 may better adhere to the rubber 34'. Next, while remaining attached to the precured piece of rubber 34', the metallic foil 30, may be detached from the precured piece of rubber 34', 68. The individual letters, numbers, and graphics are then attached to a green tire 70. In this embodiment of the invention, a clear protective coating may be sprayed over the metallic foil 30 in order to prevent degradation in the mold during the cure 72. Next, the precured rubber 34' with the metallic foil 30 and a green tire are simultaneously cured 74, and then the cured tire is removed from the mold 76.

During the methods of forming race tires and passenger tires, when the tire 10 is removed from the tire mold 36, the metallic foil 30 is positioned on the tire sidewall 14. It is through the inventive methods described herein that it is more cost effective and more efficient.

In order to utilize the above-described method with earth moving tires, a thin rubber is applied to the green tire. Nylon or a similar material may then be placed over the thin rubber. The thin rubber is then precured or cured as previously described. A nylon, acting as the carrier, may then be removed once the tire is removed from the mold.

## Claims

1. A tire comprising:
a pair of beads (12);
a carcass extending between said beads (12);
a tread (18) disposed outwardly of said carcass, said tread (18) having tread edges (22);
a pair of sidewalls (14) extending from said tread edges (22) to said respective beads (12); and
a metallic foil (30) disposed on at least one of said sidewalls (14), wherein said metallic foil (30) is adapted to be disposed on one of said sidewalls (14) before the tire (10) is cured.

2. The tire of claim 1, wherein said metallic foil (30) is connected to a carrier (32).

3. A method for adhering an element (33) to rubber, the method comprising the steps of:
providing a mold;
providing said element (33);
providing an uncured piece of rubber (34, 34') having a surface (38);
attaching said element (33) to said surface (38) of said uncured piece of rubber (34, 34');
curing said piece of rubber (34, 34'); and
removing the cured rubber from said mold.

4. The method of claim 3, wherein said element (33) is a metallic foil (30).

5. The method of claim 3 or 4, wherein said uncured piece of rubber (34, 34') is a green tire (42).

6. The method of claim 5, wherein before attaching said element (33) to said surface (38) of said uncured piece of rubber (34, 34'), the method further comprises the steps of:
attaching said metallic foil (30) to said surface (38);
precuring said uncured piece of rubber (34, 34');
detaching a portion of said precured piece of rubber having said metallic foil (30); and
attaching said precured rubber having said metallic foil (30) to the green tire;
wherein said step of curing said rubber, further comprises the step of simultaneously curing said precured piece of rubber and said green tire.

7. The method of claim 5 or 6, wherein said metallic foil (30) is connected to a carrier (32).

8. The method of at least one of claims 4-7, further comprising the steps of:
spraying said metallic foil (30) with a protective spray before curing said element (33) into said rubber during a curing process;
protecting said metallic foil (30) from degrading in said mold during said curing process.

9. The method of claim 7, further comprising the step of removing said carrier (32) from said metallic foil (30) after curing.

10. The method of claim 7, wherein said carrier (32) becomes part of the cured rubber.
